(19) **Europäisches Patentamt**
**European Patent Office**
**Office européen des brevets**

(11) **EP 3 364 116 B1**

(12) **EUROPEAN PATENT SPECIFICATION**

(45) Date of publication and mention
of the grant of the patent:
**03.06.2020 Bulletin 2020/23**

(51) Int Cl.:
*F24D 19/10* (2006.01)          *F24D 3/18* (2006.01)
*G05D 23/19* (2006.01)          *F25B 49/02* (2006.01)
*F25B 25/00* (2006.01)          *F25B 30/02* (2006.01)

(21) Application number: **17156504.7**

(22) Date of filing: **16.02.2017**

(54) **METHOD FOR CONTROLLING A HEAT PUMP SYSTEM AND HEAT PUMP SYSTEM**

VERFAHREN ZUR STEUERUNG EINER WÄRMEPUMPENSYSTEM UND
WÄRMEPUMPENSYSTEM

PROCÉDÉ DE COMMANDE D'UN SYSTÈME DE POMPE À CHALEUR ET SYSTÈME DE POMPE
À CHALEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.08.2018 Bulletin 2018/34**

(73) Proprietors:
• **Mitsubishi Electric R&D Centre Europe B.V.
Livingston EH54 5DJ (GB)**
Designated Contracting States:
**GB**
• **Mitsubishi Electric Corporation
Tokyo 100-8310 (JP)**
Designated Contracting States:
**AL AT BE BG CH CY CZ DE DK EE ES FI FR GR
HR HU IE IS IT LI LT LU LV MC MK MT NL NO PL
PT RO RS SE SI SK SM TR**

(72) Inventor: **MAITANI, Hiroshi
Livingston, EH54 5DJ (GB)**

(74) Representative: **Pfenning, Meinig & Partner mbB
Patent- und Rechtsanwälte
Theresienhöhe 11a
80339 München (DE)**

(56) References cited:
**EP-A1- 2 402 662      EP-A1- 2 559 953
JP-A- 2012 163 275    JP-A- 2012 167 890**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

EP 3 364 116 B1

**Description**

The present invention relates to a method for controlling a heat pump system wherein a flow rate of a heat transport medium flowing into a first heat exchanger is measured, and if the measured flow rate changes below a predetermined smaller flow-threshold or above a predetermined upper flow-threshold, at least one control parameter in the formula of a control method to control a compressor operation frequency is changed.

An air to water system (ATW) can be composed of a heat pump unit to supply heat to a heat transport medium as for example water, and a water circuit circulating water between rooms and heat emitter such as radiator and floor heating to supply heat to rooms by hot water. Usually this system has a controller to control operation of the heat pump and circulation pump and maintain the room temperature at a target value, and sensors to measure the room temperature, hot water temperature, water flow rate etc.

The required heat for a house is different if the ambient temperature differs and the required hot water temperature to supply required heat is different depending on the indoor temperature and the performance of the heat emitter such as the radiator, floor heating etc. Generally a data set called heat curve, which is a combination of ambient temperature and water flow temperature, is used in the controller.

Some patents exist to claim control methods to supply required heat.

> 1) JP2013264076
> The actually supplied heat is calculated from supplied water flow temperature, return water flow temperature, and water flow rate. Then it is compared to target required heat and a compressor frequency is controlled based on the deviation of actually supplied heat and target required heat.

> 2) JP2010196946
> The refrigerant flow rate is controlled to keep supplied water flow temperature at a target value and the pump operation is controlled to keep the temperature difference between supplied water flow temperature and return water flow temperature at a target value.

> 3) JP2009281666A matrix which is composed of a coefficient of heating load (Supplied heat / (indoor temperature - ambient temperature): i. e. W/K), required heat, and water flow temperature is calculated from trial operation and saved in the controller beforehand. In actual operation, the coefficient of heating load and supplied heat is calculated and if supplied heat is different from required heat on the matrix, water flow temperature is modified to match supplied heat with required heat.

> 4) JP 2012 167 890 A discloses a method for controlling a heat pump according to the preamble of claim 1, and a heat pump system according to the preamble of claim 13. This document describes a heat pump hot-water heater being adapted to suppress an excessive rise of a condensation temperature in a heat pump cycle. When the number of indoor radiators is reduced the heat pump hot-water heater controls a circulation pump.

The controller controls supplied heat from heat pump to maintain room temperature at target value by changing water flow temperature. However, it can control only the temperature of rooms in which a sensor is installed and independently and locally controllable valves such as thermostatic radiator valves (TRV) control the room temperature in other rooms. If all TRVs are always opened, the relationship between the water flow temperature and the total supplied heat from the radiators is constant under the same room temperature condition. However, if some of the TRVs are closed without the controller's intention, the total flow rate and total supplied heat are changed, although the supplied water flow temperature remains basically the same. This affects the response of the heating system. The predefined data which show the relationship between the supplied heat and the water flow temperature cannot be used any longer. Furthermore, even if the flow rate remains the same, the combination of closed TRVs might be different and the response of the whole heating system might be different. It is usually not possible that the controller knows this situation because in general not every room has a temperature sensor. This reduces the control accuracy. There is no description in the prior art how the controller can change the method or response of control if the response of the heating system is changed due to unrecognized operation of one or more TRVs.

It is therefore the problem to be solved by the present invention to allow detection of the change of the heating system in a heat pump, even if there is no temperature sensor in a space the temperature of which is to be controlled.

This problem is solved by the method according to claim 1 and the heat pump system according to claim 13. The corresponding dependent claims describe advantages embodiments of the method according to claim 1 and the heat pump system according to claim 13.

The present invention relates to a method for controlling a heat pump system. The heat pump system comprises a refrigerant cycle including a compressor. Here the compressor may be thought of as a periodically working device where the pump rate, that is the volume or amount of refrigerant compressed in a given unit of time, depends on the operation frequency. Furthermore, the heat pump system comprises a heat transport medium cycle and a first heat exchanger for exchanging heat between the refrigerant cycle and the heat transport medium cycle. In the refrigerant cycle a refrigerant is or can be introduced. In the heat transport medium cycle a heat transport medium as for example water is or can be introduced.

The heat transport medium cycle according to the invention comprises at least one second heat exchanger for exchanging heat with a space the temperature of which is to be controlled. Preferably the space is a closed space as for example a room in a house. In a preferred embodiment there may be more than one space. In such case each of these spaces can have an own second heat exchanger.

The heat pump system can have a controller to control the operation frequency of compressor. The compressor can be controlled to reduce the difference between on the one hand side the currently measured temperature Tw of heat transport medium after leaving the first heat exchanger and before entering the second heat exchanger and on the other hand side the target temperature Ts by changing an operation frequency of the compressor.

For example in case of heating, if the currently measured temperature Tw is lower than the target temperature Ts, the operation frequency can be increased to raise the temperature Tw. Futhermore, if the currently measured temperature Tw is higher than the target temperature Ts, the operation frequency can be decreased to lower the temperature Tw.

For example in case of cooling, the behaviour of control is opposite. If the currently measured temperature Tw is lower than the target temperature Ts, the operation frequency can be decreased to raise the temperature Tw and if the currently measured temperature Tw is higher than the target temperature Ts, the operation frequency can be increased to lower the temperature Tw.

The operation frequency of the compressor can be controlled by proportional control, abbreviated as P control, by proportional integral control, abbreviated as PI control or by proportional integral derivative control, abbreviated as PID control. In these methods the operation frequency of the compressor is determined from their control formulas and the operation frequency of the compressor is changed to reduce the difference between the temperature Tw and the target temperature Ts.

Preferably the frequency of the compressor, which is denoted as $MV_n$ in the following, in a time interval n can be changed according to the equation.

[In the case of P control]

$$MV_n = Kp \cdot e_n$$

[In the case of PI control]

$$MV_n = Kp \cdot \{ e_n + \Sigma e_n \cdot \Delta t / Ti \}$$

[In the case of PID control]

$$MV_n = Kp \cdot \{ e_n + \Sigma e_n \cdot \Delta t / Ti + Td \cdot (e_n - e_{n-1}) / \Delta t \}$$

wherein

Kp, Ti and Td are P control, PI control or PID control parameters,
$e_n$ is the difference between the temperature Tw and the target temperature
Ts in the time interval n and $e_{n-1}$ is the value before one control interval,
$\Delta t$ is the control interval,
$MV_n$ is the manipulated value in the time interval n, which is the operation frequency of the compressor.

As another expression , below formulas can also be used by calculating the variation amount of manipulated value $\Delta MV_n$

[In the case of P control]

$$\Delta MV_n = Kp (e_n - e_{n-1})$$

[In the case of PI control]

$$\Delta MV_n = Kp \cdot \{(e_n - e_{n-1}) + e_n \cdot \Delta t / Ti \}$$

[In the case of PID control]

$$\Delta MV_n = Kp \cdot [(e_n - e_{n-1}) + e_n \cdot \Delta t / Ti + Td \cdot \{(e_n - e_{n-1}) - (e_{n-1} - e_{n-2})\} / \Delta t ]$$

so that the operation frequency in the time interval n is obtained from the previous time interval n-1 according to

$$MV_n = MV_{n-1} + \Delta MV_n$$

According to the invention a flow rate of the heat transport medium flowing to the first heat exchanger is measured repeatedly, for example by a flow rate sensor. The flow rate can for example be defined as the amount or volume of heat transport medium flowing through a given cross section of a pipe of the heat transport medium cycle per unit of time, for example in Liter/min. Preferably, the flow rate can be measured at equidistant time intervals as for example from 1 min to 30 min in the case of using an average value of measured flow rate for predefined interval and from 10 min to 60 min in the case of using an instantaneous value.

If the measured flow rate of the heat transport medium flowing into the first heat exchanger changes below a predetermined lower flow-threshold or above a predetermined upper flow-threshold, it is determined that the flow rate has changed. If the measured flow rate of the heat transport medium flowing into the first heat exchanger changes below a predetermined lower flow-threshold or above a predetermined upper flow-threshold, at least one control parameter of the PI control or the PID control is changed.

In an advantageous embodiment of the invention a flow-ratio may be determined as measure for the flow rate. The flow-ratio may here be defined as the ratio of the measured flow rate of the heat transport medium flowing into the first heat exchanger divided by a nominal flow rate of the heat pump system of the heat transport medium flowing into the first heat exchanger. If this flow-ratio changes below a predetermined lower threshold or above a predetermined upper threshold, at least one control parameter of the PI control or the PID control is changed.

It is optionally also possible to define the flow ratio as the ratio of the measured flow rate of the heat transport medium flowing into the first heat exchanger divided by a previously measured maximum flow rate of the heat transport medium flowing into the first heat exchanger when all thermostatic radiator valves (TRVs) are opened, which preferably individually regulate the heat transport medium flow into the respective second heat exchanger. Thus, it is assumed here that at least some of the respective second heat exchangers, preferably each second heat exchanger, has its own valve.

In a preferred embodiment lower threshold ratio is 0.3 to 0.5 and upper threshold ratio is 0.6 to 0.8. The ratio can also be expressed in percent and then be compared with a threshold which is given in percent. However, of course any other equivalent mathematical expression of the threshold and of the ratio of flow rates can be compared. It is not necessary that these quantities are in fact expressed as percent.

In an optional embodiment a further step of determining may be carried out. In this further step of determining it may then be determined whether a difference between firstly the temperature Tw of heat transport medium after leaving the first heat exchanger before entering the second heat exchanger and secondly a target temperature Ts, which may be an instantaneous value or an average value or an accumulated value for a predetermined interval, becomes larger than a predetermined threshold, which is addressed as temperature-threshold in the following. The detection method of above conditions can optionally be combined with the detection method of the flow rate change after a flow rate change is detected.

Above description that the difference between a temperature Tw and a temperature Ts is compared with the predetermined temperature-threshold can preferably be understood such that the mathematical difference between Tw and Ts is compared to the threshold.

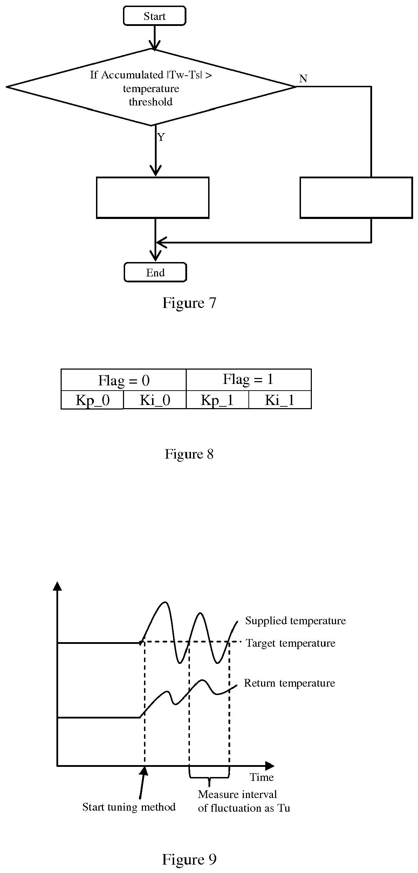

In a preferred embodiment the control parameters, for example the PI control parameters, can be selected using a predefined parameter table (an example being shown in Figure 8) when the flow rate change is detected.

In a preferred embodiment the control parameters, for example the PI control parameters, can be determined using the Ziegler-Nichols tuning method or the Tyreus Luyben tuning method, or the Step Response method.

In a preferred embodiment the heat transport medium circuit of the heat pump system may comprise a plurality of second heat exchangers which are arranged in parallel in the heat transport medium circuit. Preferably some or each of the second heat exchangers can each be connected in series with a valve as for example a thermostatic radiator valve TRV which regulates the flow of heat transport medium into the corresponding second heat exchanger. This valve preferably opens when an air temperature of the space the temperature of which is to be controlled and/or the temperature of the heat transport medium drops lower than a threshold defined by physical characteristics or electronical control, and preferably closes when the air temperature of the space the temperature of which is to be controlled and/or temperature of heat transport medium rises higher than a threshold defined by physical characteristics or electronical control. In this embodiment a separate valve can be arranged in front of each of these second heat exchangers.

Preferably the second heat exchangers can be situated in two or more separate rooms wherein at least one of said rooms has no temperature sensor. In such situation the method according to the invention is particularly useful because the response control can be kept stable even if some rooms do not have a room temperature sensor.

Preferably the first heat exchanger can comprise a condenser for heating and an evaporator for cooling which can be part of the refrigerant circuit and the second heat exchanger can be a radiator, a floor heating/cooling, a ceiling heating/cooling and/or a fan coil unit.

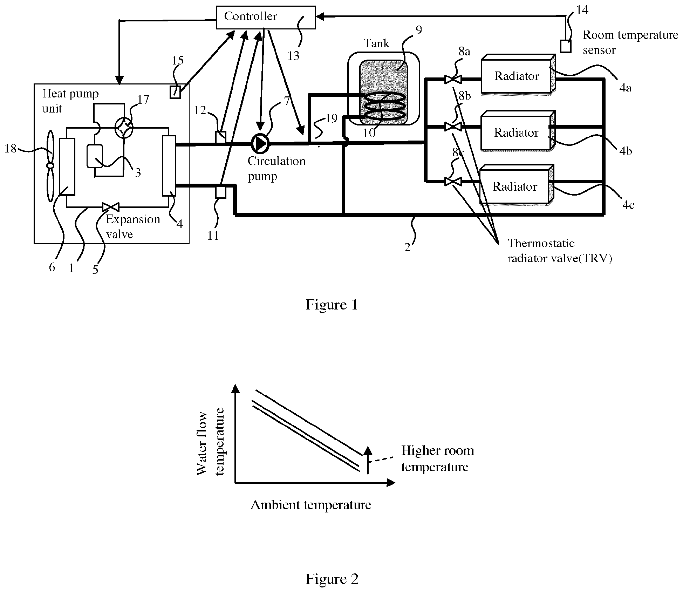

The heat pump system further comprises an expansion valve, a third heat exchanger for exchanging heat between the refrigerant cycle and outside air and a fan in front of a third heat exchanger. An opening of an expansion valve in the refrigerant circuit and a rotation speed of a fan in front of a further heat exchanger in the refrigerant circuit and/or a rotation speed of a circulation pump in the heat transporting in cycle can be controlled by a controller which also collects sensor data. Preferably, a relationship between an ambient temperature, a room temperature and the target temperature Ts of heat transfer medium can be calculated and target temperature Ts is calculated. For example, the target temperature Ts can be calculated using a heat curve as shown in Figure 2.

The present invention furthermore concerns a heat pump system which is configured to carry out a method for controlling a heat pump system as described above.

In the following the invention shall be described by way of examples with reference to figures. Same references signs denote same or corresponding features. The features shown in the description of the examples can be realized also independently from the other features of the specific example.

Figure 1     shows an air to water system configuration which can be considered an example for a heat pump system according to the present invention,

Figure 2     shows an example relationship between water flow temperature and ambient temperature,

Figure 3     shows a flow diagram of water flow temperature control,

Figure 4     shows a system response variation after closing a thermostatic radiator valve (TRV),

Figure 5     shows a flag to detect a flow rate change,

Figure 6     shows an example flow to detect a flow rate change,

Figure 7     shows an example flow to detect an error of flow temperature control

Figure 8     shows a table of pre-defined parameters depending on the flag for detecting a flow rate change

Figure 9     shows a diagram of temperature against time for explaining the Ziegler-Nichols tuning method,

Figure 10     shows an example flow diagram for a control parameter tuning procedure, by the ultimate sensitivity method,

Figure 11     shows a table of control parameters by the Ziegler-Nichols tuning method

Figure 12     shows a table of control parameters by Tyreus-Luyben tuning method

Figure 13     shows an example for a step response test, and

Figure 14     shows a table of control parameters by the step response method.

Figure 1 shows a heat pump system in which the method according to the present invention can be employed. The system comprises a refrigerant cycle 1 and a heat transport medium cycle 2. The refrigerant cycle 1 includes a compressor 3, a four-way valve 17 to switch a refrigerant flow direction, a first heat exchanger 4, a third heat exchanger 6, a fan 4 in front of a third heat exchanger 6 and an expansion valve 5. The system comprises a first heat exchanger 4 for exchanging heat between the refrigerant cycle 1 and the heat transport medium cycle 2. The first heat exchanger 4 behaves as a condenser during heating operation and behaves as an evaporator during cooling operation.

The heat transport medium cycle 2 comprises some second heat exchangers, there are three second heat exchangers 4a, 4b, 4c in this example.

In the refrigerant cycle 1 refrigerant is circulated due to the action of the compressor 3 through the first heat exchanger 4, then the expansion valve 5, then a third heat exchanger 6 and back into the compressor 3 for heating, and opposite flow direction for cooling.

The heat transport medium cycle 2, which in the present example is a water cycle, comprises a circulation pump 7 by means of which the heat transport medium, here for example water, is pumped from the first heat exchanger 4 through the pump 7 into the radiators 4a, 4b, 4c. In the flow of the heat transport medium the radiators 4a, 4b and 4c are arranged in parallel. That means that heat transport medium flowing out of the pump 7 is splitted into three branches in each of which one of the radiators 4a, 4b and 4c is arranged. Behind the radiators 4a, 4b, 4c the heat transport medium is merged and flows back into the first heat exchanger 4. In front of each of the radiators 4a, 4b, 4c, after dividing the heat transport medium, a thermostatic radiator valve (TRV) 8a, 8b, 8c is arranged.

The system shown in Figure 1 further comprises a tank 9 in which a coil 10 is situated to supply sanitary water, which coil 10 is connected such that it bypasses the radiators 4a, 4b, 4c.

In direction of the flow of the heat transport medium a flow rate sensor 11 can be arranged before the first heat exchanger 4 by which a flow rate of heat transport medium flowing into the first heat exchanger can be measured repeatedly. In the direction of the flow of the heat transport medium behind the first heat exchanger 4 a temperature sensor 12 is situated, by which a temperature Tw of heat transport medium after leaving the first heat exchanger 4 and before entering the second heat exchangers 4a, 4b, 4c can be measured. A controller 13 can read the measurement result of the flow rate sensor 11, the temperature sensor 12 and possible further sensors as for example a room temperature sensor 14 and/or an ambient temperature sensor 15. The controller can be configured to control the frequency of the compressor 3, the openings of expansion valve 5, the rotation speed of fan 18, and/or the circulation pump 7.

The controller can be configured to determine whether the flow rate measured by the flow rate sensor 11 of the heat transport medium flowing into the first heat exchanger 4 changes below a predetermined lower flow-threshold or above a predetermined upper flow-threshold. Alternatively or in addition the controller 13 can determine whether a difference, preferably an accumulated value or an average value of the difference, between a temperature Tw measured by the temperature sensor 12 and the target temperature Ts for a predetermined interval differs by more than a predetermined temperature-threshold.

If the controller 13 determines that the measured flow rate of the heat transport medium flowing into the first heat exchanger changes below a predetermined lower flow-threshold or above a predetermined upper flow-threshold and possibly a difference between the temperature Tw and the target temperature Ts becomes larger than the predetermined temperature-threshold the controller changes at least one control parameter in the formula of the control method such as the PI control or the PID control to control the operation frequency of the compressor 3.

Thus, as an optional example the present invention may comprise

- A heat pump unit with a water heat exchanger as condenser for heating and an evaporator for cooling
- a water circuit
- a circulation pump in the water circuit
- heat emitters such as radiator, floor heating, and/or fan coil unit
- room temperature sensor
- water flow temperature sensor (at least supply side)
- an ambient temperature sensor
- a controller to control supplied heat of the heat pump unit and water flow rate of the pump.

The controller may for example have the following functions:

- Collection of sensor data
- control of compressor frequency, openings of the expansion valve, rotation speed of the fan, ON/OFF rotation speed of circulation pump to maintain water flow temperature at target value
- calculation of a relationship among ambient temperature, room temperature, and target water flow temperature and determine target water flow temperature
- detect flow rate change and/or the change of accumulated or average temperature difference between measured water flow temperature and target water flow temperature
- determine next control parameters and
- change control parameters after the water flow rate has changed and/or accumulated or average deviation of water flow temperature is over a threshold value.

The latter function is useful to fit the response of control to the response of system (water circuit and heat emitter).

The controller can control a refrigerant flow rate, pressure, and temperature by controlling the compressor frequency, opening of expansion valves, and rotation of a fan. Supplied water flow temperature can mainly be controlled by the compressor frequency. As one possible example PI control can be used for determining the compressor frequency.

Initial control parameters can be defined as constant or adjusted by auto-tuning functions such as step response test or Ziegler-Nichols ultimate sensitivity method.

Figure 2 shows a relationship between an ambient temperature and a water flow temperature. This relationship can be provided manually as a heat curve input to the controller by user. Alternatively, this relationship can be found by trial operation data. The controller can calculate target water flow temperature using this relationship. In alternative way, temperature difference between room temperature and ambient temperature can be used instead of ambient temperature.

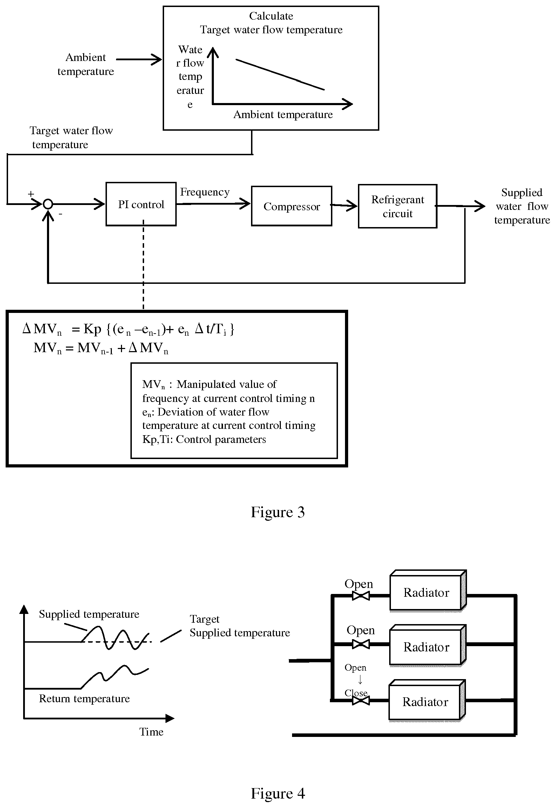

Figure 3 shows an example block diagram of a water flow temperature control.

In Figure 3 target water flow temperature is calculated at first, using the relationship of Figure 2. Then the deviation between measured water flow temperature and target water flow temperature is calculated and calculation result is provided to the control method, the PI control for example. The PI control outputs a target frequency for the compressor in the refrigerant circuit. If the compressor frequency is changed, also the supplied water flow temperature changes.

Specifically the change of the compressor frequency in a time interval n is determined as

$$\Delta MV_n = Kp \{(e_n - e_{n-1}) + e_n \cdot \Delta t / T_i\}$$

so that the operation frequency in the time interval n is obtained from the previous time interval n-1 according to

$$MV_n = MV_{n-1} + \Delta MV_n$$

wherein

Kp and $T_i$ are the PI control parameters,
$e_n$ is the difference between the temperature Tw and the target temperature Ts in the time interval n, and
$\Delta t$ is a control time interval.

This is indicated in the box in Figure 3.

Figure 4 shows the system response variation after closing off a TRV. The left diagram shows the supplied temperature against time. The dashed line is the target supplied temperature. The lower curve on the left side of Figure 4 shows the return temperature. The right hand side of Figure 4 shows an excerpt from Figure 1 showing the radiators 4a, 4b, 4c and the thermostatic radiator valves 8a, 8b, 8c. The situation here is that two of the valves 8a and 8b are open while one valve 8c has been closed.

When some of TRVs 8a, 8b, 8c are closed, the total released heat from heat emitter is decreased and the return water flow temperature rises. However, the water flow rate in the room of which the room temperature is measured, is not changed a lot and target water flow temperature is almost same as far as balance of water flow rate in the room in which the temperature is measured is not changed a lot. Then supplied heat from heat pump unit and total released heat from the emitters is different and the supplied temperature is raised more quickly. Because the response speed of the water flow temperature variation is increased due to reduction of released heat, water flow temperature control becomes unstable. To return to a stable control, when flow rate change is detected over the threshold value for a predefined interval, the controller starts changing the PI control parameters.

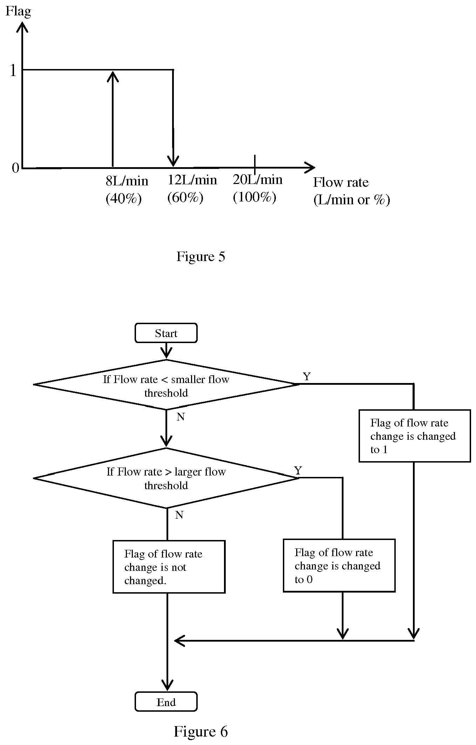

Figure 6 shows an example of a flow diagram for detecting a flow rate change. In this example it is first determined, if the flow rate is below a lower flow-threshold. If this is the case a flag, as for example shown in figure 5, is set to 1. If this is not the case it is also detected whether the flow rate is above a pre-determined upper threshold. If this it the case the flag indicating a flow rate change is set to zero. If the flow rate is within the upper and the lower threshold, the flag indicating a flow rate change is not changed.

This measured flow rate can be used as an instantaneous value which is enough measured interval without noise of measurement or an average value of some data for predetermined interval.

Figure 5 shows an example of threshold. If the nominal flow rate of the heat pump is 20L/min and the lower threshold is defined as 8L/min, and the upper threshold is defined as 12L/min, the lower threshold can be expressed as 40% and the upper threshold can be express as 60% if flow ratio is used as threshold. As another definition of the value of 100%, the maximum flow rate when all valves are opened can also be used.

When flow rate changes, deviation of water flow temperature might be expanded by response of control's getting unstable. So it might be useful to use water flow temperature data to detect a change of the response of the system in Figure 7. When accumulated value of the temperature difference between measured water flow temperature and target water flow temperature for predefined interval is over than predetermined temperature threshold, the flag to change the control parameters is set to 1. In another way, average value of temperature difference instead of accumulated value can also be used. This method can be combined with the method detecting flow rate change.

In order to change the control parameters, the controller uses predefined table like Figure 8. Parameters for flag = 0 are adjusted for high flow rate and parameters for flag = 1 are adjusted for low flow rate.

In another way, there are some automatic parameter tuning methods. The controller calculates new control parameters using an automatic tuning method, ultimate sensitivity method, and step response method for example.

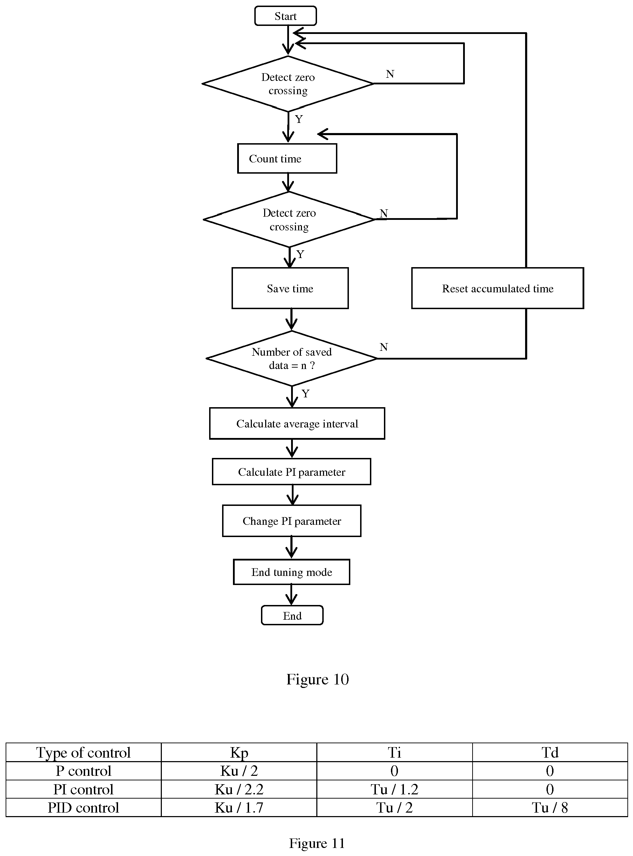

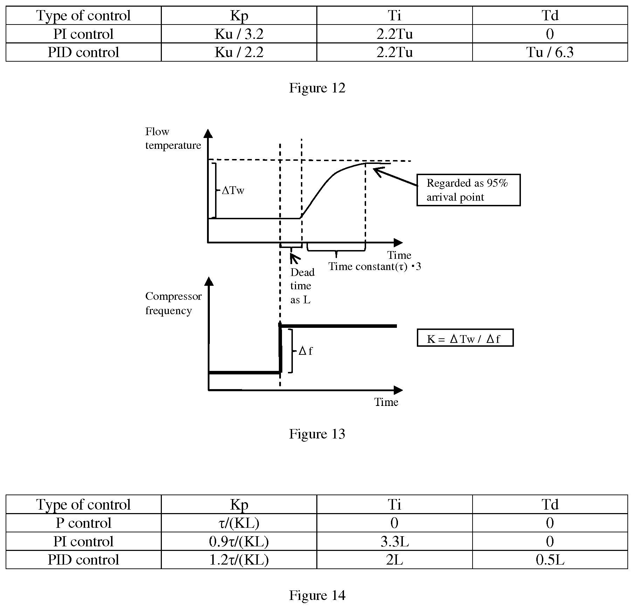

Figure 9 shows a diagram of the ultimate sensitivity method. The horizontal dashed line indicates the target water flow temperature. It can be seen that the supplied water flow temperature fluctuates around the target temperature after start tuning method. In the ultimate sensitivity method, P control is used. When tuning starts, Kp is set to zero at first. Then Kp is increased gradually, by 0.5 for example. If the water flow temperature starts fluctuation, that Kp is defined as Ku and the oscillation interval is calculated and calculation result is defined as Tu. Then new control parameters of Kp, Ti, and Td can be calculated using the table of Figure 11. As an alternative way, another set of parameter values can be determined by Tyreus-Luyben tuning method in Figure 12 for PI and PID control in order to reduce oscillatory effects and improve robustness.

Figure 10 shows the parameter tuning procedure by ultimate sensitivity method. In order to calculate the oscillation interval Tu, plurality of accumulation time intervals can be detected wherein each time interval starts at a starting zero-crossing of the temperature difference $e_n$ and ends when the temperature difference $e_n$ crosses zero for the second time after that starting zero-crossing.

Zero-crossing is determined when previous $e_n$ is lower than zero and current $e_n$ is over than zero.

In order to avoid misdetection by noise of measurement or unstable change, plural time intervals are calculated and averaged it. If average value is not much different, within 20% for example, an average of the accumulation time intervals such detected can then be set as the parameter Tu.

Alternatively the step response method can be employed for determining the control parameters. This is shown in Figure 13. When the tuning method is started, the operation frequency of compressor is raised, preferably by 10Hz or more, then the accumulation of time is started. When the water flow temperature Tw starts rising, which is detected by 1 degree increment for example, the accumulated time is defined as dead time L and another accumulation of time is started. When the rising of water flow temperature Tw almost stops, the time where 95% of variation amount of water flow temperature is achieved, it is assumed that the time is regarded as the arrival time. Then a time constant $\tau$ can be calculated with below formula.

And K which shows the ratio between input and output can be determined by calculating the difference between the last temperature Ts and initial temperature of Ts divided by the frequency change.

Then the control parameters can be calculated from the table shown in Figure 14.

## Claims

1. Method for controlling a heat pump system,
   the heat pump system comprising a refrigerant cycle (1) including a compressor (13),
   the heat pump system further comprising a heat transport medium cycle (2),
   the heat pump system further comprising a first heat exchanger (4) for exchanging heat between the refrigerant cycle (1) and the heat transport medium cycle (2),
   the heat transport medium cycle (2) comprising at least one second heat exchanger (4a, 4b, 4c) for exchanging heat with a space the temperature of which is to be controlled,
   wherein
   an operating frequency of the compressor (13) is controlled by proportional-integral control, PI control, or by proportional-integral derivative control, PID control, in order to control the temperature of the heat transport medium between after leaving from the first heat exchanger and before entering the second heat exchanger (4a, 4b, 4c) at a target value and
   a flow rate of the heat transport medium flowing into the first heat exchanger (4) is measured repeatedly, **characterized in that** if the measured flow rate of the heat transport medium flowing into the first heat exchanger (4) changes below a predetermined lower flow-threshold or above a predetermined upper flow-threshold, at least one control parameter of the PI control or the PID control is changed.

**2.** Method according to the preceding claim, wherein it is further determined whether a difference between firstly a temperature Tw of heat transport medium after leaving the first heat exchanger (4) and before entering the second heat exchanger (4a, 4b, 4c) and secondly a target temperature Ts becomes larger than a predetermined temperature-threshold,

and if the difference between the temperature Tw and the target temperature Ts becomes larger than the predetermined temperature-threshold, and the measured flow rate of the heat transport medium flowing into the first heat exchanger changes below a predetermined lower flow-threshold or above a predetermined upper flow-threshold, at least one parameter of the PI control or the PID control is changed.

**3.** Method according to one of the preceding claims, wherein
the at least one control parameter of the PI control or the PID control is changed if a flow-ratio being the ratio of the measured flow rate of the heat transport medium flowing into the first heat exchanger (4) divided by a nominal flow rate or a maximum flow rate of the heat transport medium flowing into the first heat exchanger (4) becomes smaller than a predetermined lower threshold-ratio or greater than a predetermined upper threshold-ratio.

**4.** Method according to the preceding claim,
wherein the pre-determined lower threshold-ratio is 0.3 to 0.5 and the predetermined upper threshold-ratio is 0.6 to 0.8.

**5.** Method according to one of the preceding claims, wherein the flow rate of the heat transport medium flowing into the first heat exchanger (4) is measured at equidistant times, whereby preferably a time span between adjacent measurements of the flow rate is selected from 1 min to 30 min in the case of using an average value of measured flow rate for predefined interval, or from 10 to 60 min in the case of using an instantaneous value.

**6.** Method according to the preceding claim,
wherein the control parameters are selected from a pre-defined parameter table when the control parameters are changed.

**7.** Method according to the preceding claim,
wherein the at least one control parameter is determined using Ziegler- Nichols tuning method, the Tyreus Luyben tuning method, or the Step Response Method.

**8.** Method according to one of the preceding claims wherein the heat transport medium circuit comprises a plurality of second heat exchangers (4a, 4b, 4c) which are arranged in parallel in the heat transport medium circuit (2) and which are each connected in series with a valve (8am 8bm 8c), which valve preferably opens when an air temperature of the space the temperature of which is to be controlled and/or the temperature of the heat transport medium drops lower than a threshold defined by physical characteristics or electronical control, and preferably closes when the air temperature of the space the temperature of which is to be controlled and/or temperature of heat transport medium rises higher than a threshold defined by physical characteristics or electronical control,
wherein one separate of said valves (8a, 8b, 8c is provided for each of at least two, preferably for each second heat exchanger (4a, 4b, 4c).

**9.** Method according to one of the preceding claims, wherein
the second heat exchangers (4a, 4b, 4c) are situated in two or more separate rooms,
and wherein in at least one of said rooms no room temperature sensor of the heat pump system is provided.

**10.** Method according to one of the preceding claims wherein, the first heat exchanger (4) works as a condenser for heating and as an evaporator for cooling, the second heat exchanger (4am 4bm 4c) is a radiator, a floor heating/cooling, a ceiling heating/cooling and/or a fan coil unit.

**11.** Method according to one of the preceding claims, wherein the heat pump system further comprises an expansion valve (5), a third heat exchanger (6) for exchanging heat between the refrigerant cycle and outside air and a fan (18) in front of the third heat exchanger.

**12.** Method according to one of the preceding claims, wherein
the heat transport medium is water.

**13.** Heat pump system, comprising a refrigerant cycle (1) including a compressor (3), the heat pump system further comprising a heat medium transport cycle (2) and a first heat exchanger (4) for exchanging heat between the refrigerant cycle (1) and the heat transport medium cycle (2),

wherein the heat transport medium cycle (2) comprises at least one second heat exchanger (4a, 4b, 4c) for exchanging heat with a space the temperature of which is to be controlled,

the heat pump system further comprising a controller (13) configured to control an operating frequency of the compressor (3) by proportional-integral control, PI control, or by proportional-integral derivative control, PID control, in order to control the temperature of the heat transport medium between after leaving from the first heat exchanger (4) and before entering the second heat exchanger (4a,4b,4c) at a target value, and further comprising a flow rate sensor for repeatedly measuring a flow rate of the heat transport medium flowing into the first heat exchanger (4),

wherein the controller (13) is further configured for determining whether the measured flow rate of the heat transport medium flowing into the first heat exchanger (4) changes below a predetermined lower flow-threshold or above a predetermined upper flow-threshold,

the heat pump system being **characterized in that** if the measured flow rate of the heat transport medium flowing into the first heat exchanger (4) changes below a predetermined lower flow-threshold or above a predetermined upper flow-threshold, the controller changes at least one control parameter of the PI control or the PID control.

14. Heat pump system according to the preceding claim, wherein the heat pump system is configured to carry out a method according to one of claims 1 to 13.


**Patentansprüche**

1. Verfahren zum Steuern eines Wärmepumpensystems,

   wobei das Wärmepumpensystem einen Kältemittelkreislauf (1), aufweisend einen Verdichter (13), umfasst,
   das Wärmepumpensystem ferner einen Wärmetransportmediumkreislauf (2) aufweist,
   das Wärmepumpensystem ferner einen ersten Wärmetauscher (4) zum Austauschen von Wärme zwischen dem Kältemittelkreislauf (1) und dem Wärmetransportmediumkreislauf (2) umfasst,
   der Wärmetransportmediumkreislauf (2) zumindest einen zweiten Wärmetauscher (4a, 4b, 4c) zum Austauschen von Wärme mit einem Raum, dessen Temperatur zu steuern ist, umfasst,
   wobei
   eine Betriebsfrequenz des Verdichters (13) gesteuert wird durch Proportional-Integral-Steuerung, PI-Steuerung, oder durch Proportional-Integral-Derivativ-Steuerung, PID-Steuerung, (proportional-integral derivative control) um die Temperatur des Wärmetransportmediums zwischen nach Verlassen aus dem ersten Wärmetauschers und vor Eintreten in den zweiten Wärmetauscher (4a, 4b, 4c) auf einen Zielwert zu steuern,
   und
   eine Strömungsrate des in den ersten Wärmetauscher (4) einströmenden Wärmetransportmediums wiederholt gemessen wird, **dadurch gekennzeichnet, dass**
   falls sich die gemessene Strömungsrate des in den ersten Wärmetauscher (4) einströmenden Wärmetransportmediums unter einen vorherbestimmten unteren Strömungsschwellenwert oder über einen vorherbestimmten oberen Strömungsschwellenwert ändert, zumindest ein Steuerungsparameter der PI-Steuerung oder der PID-Steuerung geändert wird.

2. Verfahren nach dem vorangehenden Anspruch, wobei ferner bestimmt wird, ob eine Differenz zwischen, erstens, einer Temperatur Tw von Wärmetransportmediums nach Verlassen des ersten Wärmetauschers (4) und vor Eintreten in den zweiten Wärmetauscher (4a, 4b, 4c) und, zweitens, einer Zieltemperatur Ts größer wird als ein vorherbestimmter Temperaturschwellenwert,
   und falls die Differenz zwischen der Temperatur Tw und der Zieltemperatur Ts größer wird als der vorherbestimmte Temperaturschwellenwert, und sich die gemessene Strömungsrate des in den ersten Wärmetauscher einströmenden Wärmetransportmediums unter einen vorherbestimmten unteren Strömungsschwellenwert oder über einen vorherbestimmten oberen Strömungsschwellenwert ändert, zumindest ein Parameter der PI-Steuerung oder der PID-Steuerung geändert wird.

3. Verfahren nach einem der vorangehenden Ansprüche, wobei der zumindest eine Steuerungsparameter der PI-Steuerung oder der PID-Steuerung geändert wird, falls ein Strömungsverhältnis, das das Verhältnis der gemessenen Strömungsrate des in den ersten Wärmetauscher (4) einströmenden Wärmetransportmediums geteilt durch eine nominale Strömungsrate oder eine maximale Strömungsrate des in den ersten Wärmetauscher (4) einströmenden Wärmetransportmediums ist, kleiner wird als ein vorherbestimmtes unteres Schwellenwertverhältnis oder größer wird als ein vorherbestimmtes oberes Schwellenwertverhältnis.

4.  Verfahren nach dem vorangehenden Anspruch,
    wobei das vorherbestimmte untere Schwellenwertverhältnis 0,3 bis 0,5 und das vorherbestimmte obere Schwellenwertverhältnis 0,6 bis 0,8 beträgt.

5.  Verfahren nach einem der vorangehenden Ansprüche, wobei die Strömungsrate des in den ersten Wärmetauscher
    (4) einströmenden Wärmetransportmediums zu äquidistanten Zeiten gemessen wird, wobei vorzugsweise eine
    Zeitspanne zwischen benachbarten Messungen der Strömungsrate gewählt wird von 1 min bis 30 min im Falle des
    Verwendens eines Durchschnittswertes der gemessenen Strömungsrate für ein vordefiniertes Intervall, oder von
    10 bis 60 min im Falle des Verwendens eines Momentanwertes.

6.  Verfahren nach dem vorangehenden Anspruch,
    wobei die Steuerungsparameter aus einer vordefinierten Parametertabelle ausgewählt werden, wenn die Steuerungsparameter geändert werden.

7.  Verfahren nach dem vorangehenden Anspruch,
    wobei der zumindest eine Steuerungsparameter unter Verwendung der Ziegler-Nichols-Abstimmungsmethode, der
    Tyreus-Luyben-Abstimmungsmethode oder der Sprungantwortmethode bestimmt wird.

8.  Verfahren nach einem der vorangehenden Ansprüche, wobei der Wärmetransportmediumkreislauf eine Vielzahl
    von zweiten Wärmetauschern (4a, 4b, 4c) umfasst, die im Wärmetransportmediumkreislauf (2) parallel angeordnet
    sind und die jeweils mit einem Ventil (8am 8bm 8c) in Reihe verbunden sind, wobei sich das Ventil vorzugsweise
    öffnet, wenn eine Lufttemperatur des Raumes, dessen Temperatur gesteuert werden soll, und/oder die Temperatur
    des Wärmetransportmediums tiefer fällt als ein Schwellenwert, der durch physikalische Eigenschaften oder elektronische Steuerung definiert ist, und vorzugsweise schließt, wenn die Lufttemperatur des Raumes, dessen Temperatur gesteuert werden soll, und/oder die Temperatur des Wärmetransportmediums höher steigt als ein Schwellenwert, der durch physikalische Eigenschaften oder elektronische Steuerung definiert ist,
    wobei ein separates der Ventile (8a, 8b, 8c) für jeden von zumindest zwei, vorzugsweise für jeden zweiten Wärmetauscher (4a, 4b, 4c), vorgesehen ist.

9.  Verfahren nach einem der vorangehenden Ansprüche, wobei die zweiten Wärmetauscher (4a, 4b, 4c) in zwei oder
    mehr separaten Räumen angeordnet sind,
    und wobei in zumindest einem der Räume kein Raumtemperatursensor des Wärmepumpensystems vorgesehen ist.

10. Verfahren nach einem der vorangehenden Ansprüche, wobei der erste Wärmetauscher (4) als ein Kondensator
    zum Erwärmen und als ein Verdampfer zum Kühlen arbeitet, der zweite Wärmetauscher (4am 4bm 4c) ein Radiator,
    eine Bodenheizung/Kühlung, eine Deckenheizung/Kühlung und/oder eine Lüfterspiraleneinheit ist.

11. Verfahren nach einem der vorangehenden Ansprüche, wobei das Wärmepumpensystem ferner ein Expansionsventil
    (5), einen dritten Wärmetauscher (6) zum Austauschen von Wärme zwischen dem Kältemittelkreislauf und Außenluft
    und einen Lüfter (18) vor dem dritten Wärmetauscher umfasst.

12. Verfahren nach einem der vorangehenden Ansprüche, wobei das Wärmetransportmedium Wasser ist.

13. Wärmepumpensystem, umfassend einen Kältemittelkreislauf (1), aufweisend einen Verdichter (3), wobei das Wärmepumpensystem ferner einen Wärmemediumtransportkreislauf (2) und einen ersten Wärmetauscher (4) zum Austauschen von Wärme zwischen dem Kältemittelkreislauf (1) und dem Wärmetransportmediumkreislauf (2) umfasst,

    wobei der Wärmetransportmediumkreislauf (2) zumindest einen zweiten Wärmetauscher (4a, 4b, 4c) zum Austauschen von Wärme mit einem Raum, dessen Temperatur gesteuert werden soll, umfasst,
    wobei das Wärmepumpensystem ferner umfasst:

    eine Steuerungseinheit (13), die eingerichtet ist, eine Betriebsfrequenz des Verdichters (3) zu steuern durch
    Proportional-Integral-Steuerung, PI-Steuerung, oder durch Proportional-Integral-Derivativ-Steuerung, PID-
    Steuerung, um die Temperatur des Wärmetransportmediums zwischen Austreten aus dem ersten Wärmetauscher (4) und vor Eintreten in den zweiten Wärmetauscher (4a, 4b, 4c) auf einen Zielwert zu steuern,
    und ferner umfassend einen Strömungsratensensor zum wiederholten Messen einer Strömungsrate des in den ersten Wärmetauscher (4) einströmenden Wärmetransportmediums,

wobei die Steuerungseinheit (13) ferner eingerichtet ist zum Bestimmen, ob sich die gemessene Strömungsrate des in den ersten Wärmetauscher (4) einströmenden Wärmetransportmediums unter einen vorherbestimmten unteren Strömungsschwellenwert oder über einen vorherbestimmten oberen Strömungsschwellenwert ändert, wobei das Wärmepumpensystem **dadurch gekennzeichnet ist, dass,**

falls sich die gemessene Strömungsrate des in den ersten Wärmetauscher (4) einströmenden Wärmetransportmediums unter einen vorherbestimmten unteren Strömungsschwellenwert oder über einen vorherbestimmten oberen Strömungsschwellenwert ändert, die Steuerungseinheit zumindest einen Steuerungsparameter der PI-Steuerung oder der PID-Steuerung ändert.

**14.** Wärmepumpensystem nach dem vorangehenden Anspruch, wobei das Wärmepumpensystem eingerichtet ist, ein Verfahren nach einem der Ansprüche 1 bis 13 durchzuführen.

**Revendications**

**1.** Procédé de régulation d'un système de pompe à chaleur,
le système de pompe à chaleur comprenant un cycle de réfrigérant (1) incluant un compresseur (13),
le système de pompe à chaleur comprenant en outre un cycle de milieu de transport de chaleur (2),
le système de pompe à chaleur comprenant en outre un premier échangeur de chaleur (4) pour échanger de la chaleur entre le cycle de réfrigérant (1) et le cycle de milieu de transport de chaleur (2),
le cycle de milieu de transport de chaleur (2) comprenant au moins un deuxième échangeur de chaleur (4a, 4b, 4c) pour échanger de la chaleur avec un espace dont la température doit être régulée,
dans lequel une fréquence de fonctionnement du compresseur (13) est régulée par une régulation proportionnelle et intégrale, régulation PI, ou par une régulation proportionnelle, intégrale et dérivée, régulation PID, afin de réguler la température du milieu de transport de chaleur entre le moment où il quitte le premier échangeur de chaleur et celui où il entre dans le deuxième échangeur de chaleur (4a, 4b, 4c) à une valeur cible
et un débit du milieu de transport de chaleur s'écoulant dans le premier échangeur de chaleur (4) est mesuré de manière répétée, **caractérisé en ce que** si le débit mesuré du milieu de transport de chaleur s'écoulant dans le premier échangeur de chaleur (4) change en dessous d'un seuil d'écoulement inférieur prédéterminé ou au-dessus d'un seuil d'écoulement supérieur prédéterminé, au moins un paramètre de régulation de la régulation PI ou de la régulation PID est modifié.

**2.** Procédé selon la revendication précédente, dans lequel il est en outre déterminé si une différence entre premièrement, une température Tw du milieu de transport de chaleur après qu'il quitte le premier échangeur de chaleur (4) et avant qu'il entre dans le deuxième échangeur de chaleur (4a, 4b, 4c) et deuxièmement, une température cible Ts devient supérieure à un seuil de température prédéterminé,
et si la différence entre la température Tw et la température cible Ts devient supérieure au seuil de température prédéterminé, et si le débit mesuré du milieu de transport de chaleur s'écoulant dans le premier échangeur de chaleur change en dessous d'un seuil d'écoulement inférieur prédéterminé ou au-dessus d'un seuil d'écoulement supérieur prédéterminé, au moins un paramètre de la régulation PI ou de la régulation PID est modifié.

**3.** Procédé selon l'une des revendications précédentes, dans lequel l'au moins un paramètre de régulation de la régulation PI ou de la régulation PID est modifié si un rapport d'écoulement entre le rapport du débit mesuré du milieu de transport de chaleur s'écoulant dans le premier échangeur de chaleur (4) divisé par un débit nominal ou un débit maximal du milieu de transport de chaleur s'écoulant dans le premier échangeur de chaleur (4) devient inférieur à un rapport seuil inférieur prédéterminé ou supérieur à un rapport seuil supérieur prédéterminé.

**4.** Procédé selon la revendication précédente, dans lequel le rapport seuil inférieur prédéterminé est de 0,3 à 0,5 et le rapport seuil supérieur prédéterminé est de 0,6 à 0,8.

**5.** Procédé selon la revendication précédente, dans lequel le débit du milieu de transport de chaleur s'écoulant dans le premier échangeur de chaleur (4) est mesuré à des temps équidistants, un laps de temps entre des mesures adjacentes du débit étant de préférence sélectionné de 1 minute à 30 minute en cas d'utilisation d'une valeur moyenne de débit mesuré pour un intervalle prédéfini, ou de 10 à 60 minutes en cas d'utilisation d'une valeur instantanée.

**6.** Procédé selon la revendication précédente, dans lequel les paramètres de régulation sont sélectionnés à partir d'un tableau de paramètres prédéfinis lorsque les paramètres de régulation sont modifiés.

7. Procédé selon la revendication précédente, dans lequel l'au moins un paramètre de régulation est déterminé au moyen du procédé de réglage Ziegler-Nichols, du procédé de réglage Tyreus-Luyben ou du procédé de réponse transitoire.

8. Procédé selon l'une des revendications précédentes, dans lequel le circuit de milieu de transport de chaleur comprend une pluralité de deuxièmes échangeurs de chaleur (4a, 4b, 4c) qui sont agencés en parallèle dans le circuit de milieu de transport de chaleur (2) et qui sont chacun connectés en série avec une valve (8am, 8bm, 8c), laquelle valve s'ouvre de préférence lorsqu'une température d'air de l'espace dont la température doit être régulée et/ou la température du milieu de transport de chaleur chute plus bas qu'un seuil défini par des caractéristiques physiques ou une régulation électronique, et se ferme de préférence lorsque la température d'air de l'espace dont la température doit être régulée et/ou la température du milieu de transport de chaleur augmente plus haut qu'un seuil défini par des caractéristiques physiques ou une régulation électronique, dans lequel une valve distincte desdites valves (8a, 8b, 8c) est prévue pour chacun d'au moins deux, de préférence pour chaque deuxième échangeur de chaleur (4a, 4b, 4c).

9. Procédé selon l'une des revendications précédentes, dans lequel les deuxièmes échangeurs de chaleur (4a, 4b, 4c) sont situés dans deux pièces distinctes ou plus, et dans lequel dans au moins une desdites pièces aucun capteur de température de pièce du système de pompe à chaleur n'est prévu.

10. Procédé selon l'une des revendications précédentes, dans lequel le premier échangeur de chaleur (4) fonctionne comme un condensateur pour le chauffage et comme un évaporateur pour le refroidissement, le deuxième échangeur de chaleur (4am, 4bm, 4c) est un radiateur, une unité de chauffage/refroidissement par le sol, une unité de chauffage/refroidissement par le plafond et/ou un ventilo-convecteur.

11. Procédé selon l'une des revendications précédentes, dans lequel le système de pompe à chaleur comprend en outre une détendeur (5), un troisième échangeur de chaleur (6) pour échanger de la chaleur entre le cycle de réfrigérant et l'air extérieur et un ventilateur (18) en face du troisième échangeur de chaleur.

12. Procédé selon l'une des revendications précédentes, dans lequel le milieu de transport de chaleur est de l'eau.

13. Système de pompe à chaleur, comprenant un cycle de réfrigérant (1) incluant un compresseur (3), le système de pompe à chaleur comprenant en outre un cycle de transport de milieu de chaleur (2) et un premier échangeur de chaleur (4) pour échanger de la chaleur entre le cycle de réfrigérant (1) et le cycle de milieu de transport de chaleur (2), dans lequel le cycle de milieu de transport de chaleur (2) comprend au moins un deuxième échangeur de chaleur (4a, 4b, 4c) pour échanger de la chaleur avec un espace dont la température doit être régulée, le système de pompe à chaleur comprenant en outre un régulateur (13) configuré pour réguler une fréquence de fonctionnement du compresseur (3) par régulation proportionnelle et intégrale, régulation PI, ou par régulation proportionnelle, intégrale et dérivée, régulation PID, afin de réguler la température du milieu de transport de chaleur entre le moment où il quitte le premier échangeur de chaleur (4) et celui où il entre dans le deuxième échangeur de chaleur (4a, 4b, 4c) à une valeur cible, et comprenant en outre un capteur de débit pour mesurer de manière répétée un débit du milieu de transport de chaleur s'écoulant dans le premier échangeur de chaleur (4), dans lequel le régulateur (13) est en outre configuré pour déterminer si le débit mesuré du milieu de transport de chaleur s'écoulant dans le premier échangeur de chaleur (4) change en dessous d'un seuil d'écoulement inférieur prédéterminé ou au-dessus d'un seuil d'écoulement supérieur prédéterminé, le système de pompe à chaleur étant **caractérisé en ce que** si le débit mesuré du milieu de transport de chaleur s'écoulant dans le premier échangeur de chaleur (4) change en dessous d'un seuil d'écoulement inférieur prédéterminé ou au-dessus d'un seuil d'écoulement supérieur prédéterminé, le régulateur modifie au moins un paramètre de régulation de la régulation PI ou de la régulation PID.

14. Système de pompe à chaleur selon la revendication précédente, dans lequel le système de pompe à chaleur est configuré pour réaliser un procédé selon l'une des revendications 1 à 13.

Figure 1

Figure 2

Calculate
Target water flow temperature

Ambient
temperature

Water flow temperature

Ambient temperature

Target water flow
temperature

+ ○ - → PI control →Frequency→ Compressor → Refrigerant circuit → Supplied water flow temperature

$$\Delta MV_n = Kp \{(e_n - e_{n-1}) + e_n \, \Delta t / T_i \}$$
$$MV_n = MV_{n-1} + \Delta MV_n$$

$MV_n$ : Manipulated value of frequency at current control timing n
$e_n$: Deviation of water flow temperature at current control timing
Kp,Ti: Control parameters

Figure 3

Supplied temperature

Target Supplied temperature

Return temperature

Time

Open — Radiator

Open — Radiator

Open ↓ Close — Radiator

Figure 4

Flag

1

0

8L/min 12L/min 20L/min Flow rate
(40%) (60%) (100%) (L/min or %)

Figure 5

Start

If Flow rate < smaller flow
threshold

Y

N

Flag of flow rate
change is changed
to 1

If Flow rate > larger flow
threshold

Y

N

Flag of flow rate
change is not
changed.

Flag of flow rate
change is changed
to 0

End

Figure 6

Start

If Accumulated |Tw-Ts| > temperature threshold

N

Y

End

Figure 7

| Flag = 0 | | Flag = 1 | |
|---|---|---|---|
| Kp_0 | Ki_0 | Kp_1 | Ki_1 |

Figure 8

Supplied temperature

Target temperature

Return temperature

Time

Measure interval of fluctuation as Tu

Start tuning method

Figure 9

Start

Detect zero crossing — N

Y

Count time

Detect zero crossing — N

Y

Save time

Reset accumulated time

Number of saved data = n ? — N

Y

Calculate average interval

Calculate PI parameter

Change PI parameter

End tuning mode

End

Figure 10

| Type of control | Kp | Ti | Td |
|---|---|---|---|
| P control | Ku / 2 | 0 | 0 |
| PI control | Ku / 2.2 | Tu / 1.2 | 0 |
| PID control | Ku / 1.7 | Tu / 2 | Tu / 8 |

Figure 11

| Type of control | Kp | Ti | Td |
|---|---|---|---|
| PI control | Ku / 3.2 | 2.2Tu | 0 |
| PID control | Ku / 2.2 | 2.2Tu | Tu / 6.3 |

Figure 12

Figure 13

| Type of control | Kp | Ti | Td |
|---|---|---|---|
| P control | $\tau/(KL)$ | 0 | 0 |
| PI control | $0.9\tau/(KL)$ | 3.3L | 0 |
| PID control | $1.2\tau/(KL)$ | 2L | 0.5L |

Figure 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013264076 B
- JP 2010196946 B
- JP 2009281666 A
- JP 2012167890 A